(19) **Europäisches Patentamt**
**European Patent Office**
**Office européen des brevets**

(11) **EP 1 659 683 B1**

(12) **EUROPÄISCHE PATENTSCHRIFT**

(45) Veröffentlichungstag und Bekanntmachung des Hinweises auf die Patenterteilung:
**20.02.2008 Patentblatt 2008/08**

(51) Int Cl.:
*H02P 7/28* (2006.01)    *G01P 3/44* (2006.01)
*G01P 3/48* (2006.01)

(21) Anmeldenummer: 05109609.7

(22) Anmeldetag: **17.10.2005**

(54) **Verfahren zum Ermitteln eines durch mechanische Kommutierung eines Gleichstrommotors entstehenden Wechselanteils eines Stroms und Vorrichtung hierfür**

Method and apparatus for determining the AC component of a current produced by the mechanical commutation of a DC motor

Dispositif et méthode destinés à determiner le composant alternatif d'un courant produit par la commutation mécanique d'un moteur à courant continu

(84) Benannte Vertragsstaaten:
**DE ES FR GB**

(30) Priorität: **23.11.2004 DE 102004056410**

(43) Veröffentlichungstag der Anmeldung:
**24.05.2006 Patentblatt 2006/21**

(73) Patentinhaber: **ROBERT BOSCH GMBH**
**70442 Stuttgart (DE)**

(72) Erfinder:
• **Brosche, Thomas**
**70195, Stuttgart (DE)**
• **Heimburger, Stefan**
**77731, Willstaett-Legelshurst (DE)**
• **Krueger, Hartmut**
**77830, Buehlertal (DE)**

• **Bitzer, Matthias**
**70569, Stuttgart (DE)**

(56) Entgegenhaltungen:
EP-A- 0 890 841       WO-A- 02/095925
DE-A1- 4 135 873     US-A- 4 684 858
US-A- 5 898 288

• BIRK M: "UNKONVENTIONELLE DREHZAHLMESSUNG UND -REGELUNG BEI GLEICHSTROMMOTOREN. SWITCHED-CAPACITOR-FILTER BESTIMMT DREHZAHL AUSDER WELLIGKEIT" 1. Dezember 1984 (1984-12-01), ELEKTRONIK, WEKA FACHZEITSCHRIFTENVERLAG, POING, DE, PAGE(S) 71-72 , XP002029304 ISSN: 0013-5658 * das ganze Dokument *

**Beschreibung**

Die Erfindung betrifft ein Verfahren zum Ermitteln eines durch mechanische Kommutierung eines Gleichstrommotors entstehenden Wechselanteils eines Stroms gemäß Patentanspruch 1 und eine Vorrichtung zum Ermitteln eines durch Kommutierung eines Gleichstommotors hervorgerufenen Wechselanteils eines Stroms gemäß Patentanspruch 7.

Zu einer Ermittlung einer Winkelposition von mechanisch kommutierten Gleichstrommotoren (DC-Motoren) werden nach derzeitigem Stand der Technik in der Regel Hall-Sensoren eingesetzt bzw. alternativ Kommutierungsrippel des Stromsignals nach dem so genannten Ripple-Counter-Verfahren gezählt. Bei dem bereits bekannten Ripple-Counter-Verfahren wird meist mittels analoger bzw. digitaler Filterung der kommutierungsbedingte Wechselanteil des Stromsignals (Kommutierungsrippel) extrahiert und anhand dieses gefilterten Signals die Anzahl der Kommutierungsrippel bestimmt. Die Anzahl der Kommutierungsrippel ist ein Maß für den Motor-Drehwinkel und damit die Position nachgeschalteter Aktuatorik. Zur Extraktion der Kommutierungsrippel werden üblicherweise Hardwarefilter eingesetzt. Als Hardwarefilter kommen beispielsweise Tiefpässe, Hochpässe bzw. Bandpässe zum Einsatz.

Die Messung der Aktuatorposition ist für verschiedenste Anwendungen erforderlich, in denen kommutierte Gleichstrommotoren eingesetzt werden. Die genannten Gleichstrommotoren werden beispielsweise als Stellmotoren für diverse Anwendungen in der Automobiltechnik eingesetzt, wie beispielsweise elektrische Sitzverstellungen, Fensterheber, Schiebedach usw.

Weiterhin sind im Bereich der Regelungstechnik Beobachter- bzw. Filtereinrichtungen (Zustandsbeobachter, Luenberger-Beobachter, Kalman-Filter) bekannt, mit denen Zustandsgrößen eines dynamischen Systems (z.B. eines Gleichstrommotors) geschätzt werden können.

Ein Verfahren zum Ermitteln der Drehzahl bei mechanisch kommutierten Gleichstrommotoren ist aus Dokument EP-A-890,841 bekannt.

Es ist die Aufgabe der Erfindung, ein verbessertes Verfahren und eine verbesserte Vorrichtung zum Ermitteln des kommutierungsbedingten Wechselanteils des Stroms eines Gleichstrommotors bereitzustellen.

Die Aufgabe wird erfindungsgemäß gelöst mit einem Verfahren gemäß Patentanspruch 1 sowie mit einer Vorrichtung gemäß Patentanspruch 7. Bevorzugte Weiterbildungen der Erfindung sind in abhängigen Ansprüchen angegeben.

Das erfindungsgemäße Verfahren zum Ermitteln eines kommutierungsbedingten Wechselanteils eines Stroms eines Gleichstrommotors umfasst folgende Verfahrensschritte:

- Messen des Stromes,
- Schätzen eines Gleichstromanteils des Stromes, wobei das Schätzen mit Hilfe einer Beobachtereinrichtung mit einem mathematischen Modell des Gleichstrommotors durchgeführt wird, und
- Ermitteln des Wechselanteils aus einer Differenz aus dem geschätzten Gleichstromanteil und dem gemessenen Strom.

Das erfindungsgemäße Verfahren sieht im Vergleich zu herkömmlichen, rein messtechnischen Ermittlungsverfahren zusätzlich ein Schätzen eines Gleichstromanteils des Stromes mit Hilfe einer Beobachtereinrichtung vor. Die Beobachtereinrichtung umfasst dabei ein mathematisches Modell des Gleichstrommotors. Aus einer Differenzbildung zwischen geschätztem Gleichstromanteil und gemessenem Strom ergibt sich der kommutierungsbedingte Wechselanteil des Stroms, wodurch in vorteilhafter Weise der kommutierungsbedingte Wechselanteil vergleichsweise genau bestimmt und zudem ein Einsatz von Hardwarefiltern minimiert bzw. eliminiert werden kann. Die Minimierung des Einsatzes von Hardwarefiltern wird als besonders vorteilhaft angesehen, da diese Filter stets mit Streuungen, Ungenauigkeiten, Bauteil- bzw. Schaltungsflächenaufwand und damit Zusatzkosten verbunden sind. Der Einsatz von üblichen Hardware- bzw. Softwarefiltern erlaubt zudem in der Regel nur eine unzureichend genaue Extraktion des kommutierungsbedingten Wechselanteils.

Eine bevorzugte Weiterbildung des erfindungsgemäßen Verfahrens sieht vor, dass eine im Hinblick auf die Bestimmung des Wechselanteils vorteilhafte Dimensionierung der Beobachtereinrichtung durchgeführt wird. Dies wird dadurch erreicht, dass ein Korrekturterm, d.h. eine gewichtete Rückführung der Differenz aus geschätzten und messtechnisch ermittelten Grö-βen (z.B. Strom, Drehzahl, Winkelposition) auf das Modell des Gleichstrommotors, bzw. den Simulatorteil des Beobachters, aufgeschaltet wird. Dadurch wird erreicht, dass die Rückführung der Differenz auf das Modell des Gleichstrommotors parametrierbar ausgestaltet ist, wodurch eine Ausgangsgröße der Beobachtereinrichtung in vorteilhafter Weise an eine messbare dynamische Zustandsgröße des Gleichstrommotors angepasst werden kann.

Gemäß einer weiteren bevorzugten Weiterbildung des erfindungsgemäßen Verfahrens sind die Gewichtung der rückgeführten Differenz sowie das Modell des Gleichstrommotors derart ausgebildet, dass der geschätzte Strom im Wesentlichen keinen kommutierungsbedingten Wechselanteil aufweist. Aufgrund dieser Tatsache kann eine Differenzbildung zwischen gemessenem und geschätztem Strom auf einfache Weise erfolgen und eine Extraktion des Wechselanteils somit effizient durchgeführt werden. Der Stromverlauf des Gleichstrommotors wird auf diese Weise derart nachgebildet, dass eine Signalform des geschätzten Motorstroms gegenüber dem tatsächlichen Motorstrom geglättet ist.

Die Erfindung wird im Folgenden anhand von Figuren detailliert beschrieben. Dabei zeigt:

Figur 1 eine prinzipielle Darstellung eines mathematischen Modells für einen Gleichstrommotor,

Figur 2 ein Blockschaltbild einer Vorrichtung zum Ermitteln der Kommutierungsrippel eines Gleichstrommotors gemäß der vorliegenden Erfindung,

Figur 3 eine prinzipielle Darstellung einer Beobachtereinrichtung, auf die eine geschätzte Ausgangsgröße der Beobachtereinrichtung gewichtet zurückgeführt wird,

Figur 4 Zeitverläufe eines messtechnisch ermittelten Stromes und eines geschätzten Gleichstromanteil des Stromes, die durch die vorliegende Erfindung bereit gestellt werden, und

Figur 5 einen Zeitverlauf eines Differenzstromssignals aus gemessenem Strom und geschätztem Gleichstromanteil, das durch die Erfindung bereitgestellt wird.

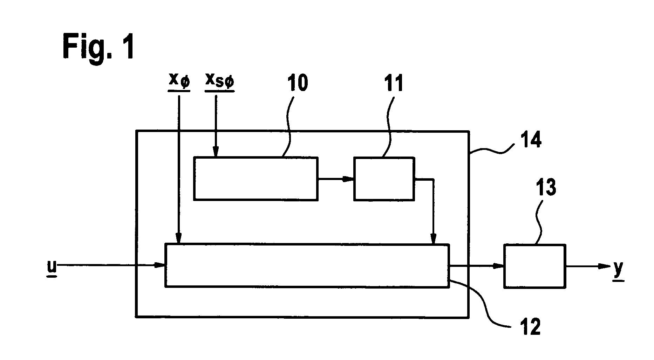

Figur 1 zeigt eine prinzipielle Darstellung eines mathematischen Modells des Gleichstrommotors. Grundlage ist ein mathematisches, dynamisches Streckenmodell des gesamten Gleichstrommotors, das in folgender Form beschrieben werden kann:

Zustandsdifferenzialgleichung:

$$\dot{\underline{x}}_M = \underline{A}_M\,\underline{x}_M + \underline{B}_M\,\underline{u} + \underline{E}z$$

Gleichung für die Ausgangs-/Messgrößen des Streckenmodels:

$$\underline{y}_M = \underline{C}_M\,\underline{x}_M$$

Das mathematische Streckenmodell kann um ein mathematisches Störmodell für eine Störgröße $\underline{z}$ erweitert werden, wobei das Störmodell folgendermaßen mathematisch darstellbar ist:

$$\dot{\underline{x}}_S = \underline{A}_S\,\underline{x}_S$$

$$\underline{z} = \underline{C}_S\,\underline{x}_S$$

Die einzelnen Variablen und Parameter des Strecken- und des Störmodells haben dabei folgende Bedeutung:

$\underline{x}_M$     Zustandsgrößen des Streckenmodells

$\underline{x}_{M0}$     Anfangswerte der Zustandsgrößen des Streckenmodells

$\underline{x}_S$     Zustandsgrößen des Störmodells

$\underline{x}_{S0}$     Anfangswerte der Zustandsgrößen des Störmodells

$\underline{u}$     Eingangsgrößen

$\underline{y}_M$     Ausgangs-/Messgrößen des Streckenmodells

$\underline{y}_{schätz}$     Geschätzte Ausgangsgrößen des Beobachters

| $\underline{y}_{mess}$ | Messgrößen |
|---|---|
| $\underline{y}$ | Ausgangsgrößen des erweiterten Streckenmodells |
| $\underline{z}$ | Ausgangsgrößen des Störgrößenmodels |
| $\underline{A}_M$ | Dynamikmatrix des Streckenmodells |
| $\underline{B}_M$ | Eingangsmatrix des Streckenmodells |
| $\underline{C}_M$ | Ausgangsmatrix des Streckenmodells |
| $\underline{A}_s$ | Dynamikmatrix des Störmodells |
| $\underline{E}$ | Matrix, über die die Störgröße $\underline{z}$ auf das Streckenmodell wirkt |

Im Streckenmodell sind wesentliche dynamische Eigenschaften des Gleichstrommotors mathematisch formuliert. Dies kann in Form von Größen erfolgen, die aus physikalischen Parametern abgeleitet sind. Beispielsweise kann dies eine elektrische und/oder mechanische Charakteristik des Gleichstrommotors, Elastizitäten eines Getriebes des Motors sowie dessen Trägheitsmomente umfassen. Ein üblicherweise nicht messbares Lastmoment wird vorteilhafterweise als Störgröße definiert.

Figur 1 zeigt eine prinzipielle Darstellung eines erweiterten Streckenmodells für den Gleichstrommotor, das eine Basis für einen Beobachterentwurf darstellt. Das erweiterte Streckenmodell 14 umfasst dabei ein Streckenmodell 12, ein Störmodell 10 und eine Ausgangsmatrix 11 des Störmodells. Die Eingangsgröße $\underline{u}$ und der Anfangszustand $\underline{x}_0$ = $[\underline{x}_{M0},\underline{x}_{S0}]^T$ dienen einer definierten Zustandsbeschreibung des dynamischen Streckenmodells. Über eine Ausgangsmatrix 13 des Streckenmodells 12 steht eine Ausgangsgröße $\underline{y}$ des erweiterten Streckenmodells 14 zur Verfügung. Das erweiterte Streckenmodell 14 lässt sich durch folgende mathematische Beziehungen beschreiben:

$$\underbrace{\begin{bmatrix} \underline{\dot{x}}_M \\ \underline{\dot{x}}_S \end{bmatrix}}_{\underline{\dot{x}}} = \underbrace{\begin{bmatrix} \underline{A}_M & \underline{EC}_S \\ 0 & \underline{A}_S \end{bmatrix}}_{\underline{A}} \underbrace{\begin{bmatrix} \underline{x}_M \\ \underline{x}_S \end{bmatrix}}_{\underline{x}} + \underbrace{\begin{bmatrix} \underline{B}_M \\ 0 \end{bmatrix}}_{\underline{B}} \underline{u}$$

$$\underline{y} = \underbrace{[\underline{C}_M\,0]}_{\underline{C}} \begin{bmatrix} \underline{x}_M \\ \underline{x}_S \end{bmatrix}$$

Durch den Entwurf eines Zustandsbeobachters aus dem Stand der Technik (beispielsweise Luenberger-Beobachter oder Kalman-Filter) können Schätzwerte für physikalische Größen ermittelt werden. Der Zustandsbeobachter wird mittels des Strecken- bzw. Beobachterentwurfsmodells hergeleitet und lässt sich dabei in folgender Form mathematisch darstellen:

$$\underline{\dot{\hat{x}}} = \underline{A}\,\underline{\hat{x}} + \underline{B}\,\underline{u} + \underline{L}\left(\underline{y}_{mess} - \underline{y}_{schätz}\right)$$
$$\underline{y}_{schätz} = \underline{C}\,\underline{\hat{x}}$$

Dabei ist die Matrix L eine im Entwurfsprozess des Zustandsbeobachters zu definierende Größe. Die Beobachtungsmatrix C wird so formuliert, dass ein Schätzwert für den Strom als Ausgangsgröße $\underline{y}_{schätz}$ des Zustandsbeobachters zur Verfügung steht.

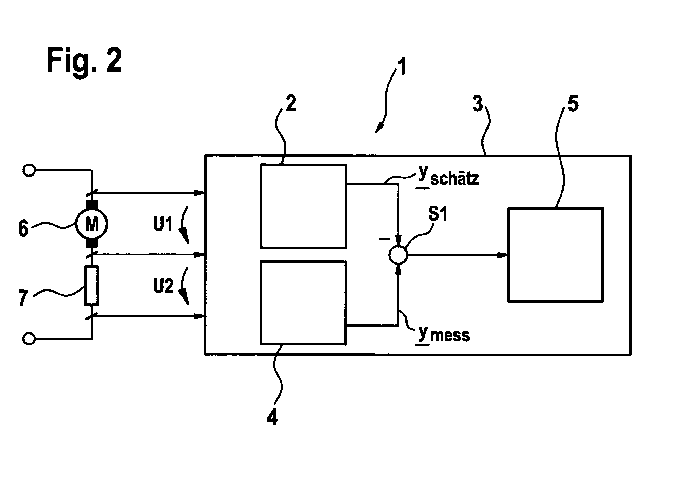

Figur 2 zeigt ein prinzipielles Blockschaltbild einer Vorrichtung zur Extraktion der Kommutierungsrippel eines Gleichstrommotors 6 gemäß der vorliegenden Erfindung. Die Vorrichtung 1 umfasst dabei eine elektronische Recheneinrichtung 3 mit einer Beobachtereinrichtung 2 und einer Messeinrichtung 4. Mittels der Messeinrichtung 4 wird eine messtechnische Erfassung des Stroms durch den Gleichstrommotor 6 durchgeführt. Die elektronische Recheneinrichtung 3 kann beispielsweise als Mikrocontroller oder digitale Hardware ausgebildet sein.

Über dem Gleichstrommotor 6 wird eine Betriebsspannung U1 abgegriffen, die an die Vorrichtung 1 zugeführt wird. Ein Spannungsabfall U2 über einem mit dem Gleichstrommotor 6 in Serie geschalteten Messwiderstand 7 wird an die Vorrichtung 1 zugeführt. Dabei ist die Spannung U2 ein Abbild für den Strom durch den Gleichstrommotor 6. Der Messwiderstand 7 kann als niederohmiger Shunt ausgebildet sein, wobei die über dem Shunt abfallende Spannung U2 analog-digital gewandelt und mit Hilfe der Messeinrichtung 4 in einen Ist-Stromwert des Gleichstrommotors 6 umgerechnet wird. Somit werden der Vorrichtung 1 als messtechnisch ermittelte Größen die Spannung U2 als Abbild für den Strom und die Betriebsspannung U1 des Gleichstrommotors 6 zugeführt. Anstelle des Messwiderstands 7 kann auch ein Stromwandler eingesetzt werden.

Mit Hilfe der Beobachtereinrichtung 2 werden Zustandsgrößen des Gleichstrommotors 6 geschätzt. Die Schätzgröße $i_{schätz}$ für den Strom als Bestandteil des Ausgangsgrößen-Vektors $\underline{y}_{schätz}$ der Beobachtereinrichtung 2 wird einem ersten Summationspunkt S1 mit negativem Vorzeichen zugeführt. Dem ersten Summationspunkt S1 wird weiterhin der messtechnisch ermittelte Strom $i_{mess}$ zugeführt. Am ersten Summationspunkt S1 erfolgt somit eine Differenzbildung zwischen dem messtechnisch ermittelten Strom $i_{mess}$ und dem geschätzten Strom $i_{schätz}$ der Beobachtereinrichtung 2. Dabei ist der Beobachter so dimensioniert, dass der geschätzte Strom $i_{schätz}$ der Beobachtereinrichtung 2 im Wesentlichen keine Kommutierungsrippel aufweist. Ferner weist der geschätzte Strom $i_{schätz}$ in Relation zum gemessenen Strom $i_{mess}$ im Wesentlichen keine Verzögerung bzw. Gruppenlaufzeit auf. Vom ersten Summationspunkt S1 werden somit die Kommutierungsrippel des Gleichstrommotors 6 einer asynchronen Zählereinrichtung 5 zugeführt und können von der asynchronen Zählereinrichtung 5 ausgewertet und weiterverarbeitet werden. Die Anordnung der Zählereinrichtung 5 innerhalb der elektronischen Recheneinrichtung 3 ist lediglich beispielhaft zu sehen. Dies bedeutet, dass die asynchrone Zählereinrichtung 5 auch außerhalb der elektronischen Recheneinrichtung 3 angeordnet sein kann.

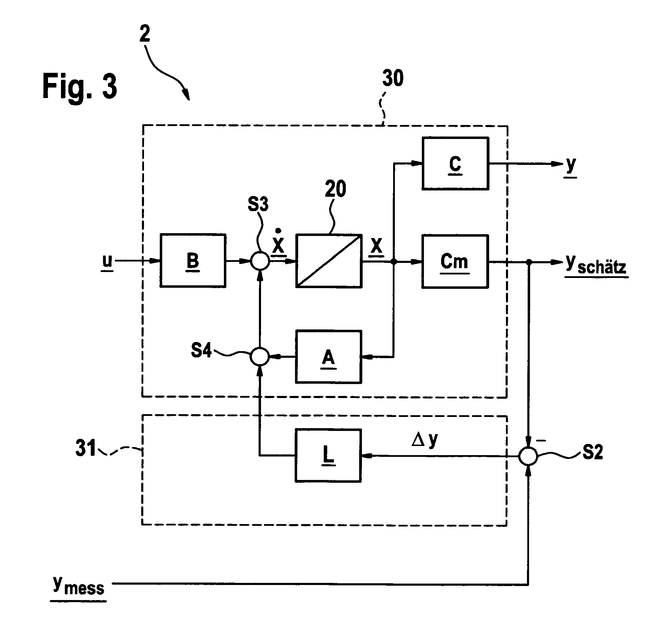

Figur 3 zeigt eine detaillierte Darstellung der Beobachtereinrichtung 2. Die Figur zeigt in graphischer Form die oben beschriebenen mathematischen Differenzialgleichungen, die auf ein mathematisches Modell 30 des Gleichstrommotors 6 angewendet worden sind. Man erkennt, dass die geschätzten Ausgangsgrößen $\underline{Y}_{schätz}$ (z.B. Strom, Drehzahl, Drehwinkel) mit negativem Vorzeichen einem zweiten Summationspunkt S2 zugeführt werden.

Dem zweiten Summationspunkt S2 werden weiterhin die entsprechenden Messwerte $y_{mess}$ zugeführt. Ein Differenzwert $\Delta y$ aus geschätztem und messtechnisch ermittelten Parametern wird einer Matrix $\underline{L}$ zugeführt, die innerhalb einer Rückführungseinrichtung 31 angeordnet ist. Die Matrix $\underline{L}$ stellt einen Gewichtungsfaktor dar, mit dessen Hilfe die Differenzgröße $\Delta y$ gewichtet dem mathematischen Modell 30 aufgeschalten wird. Die Parameter der Matrix $\underline{L}$ sind dabei zusammen mit Parametern der Modellmatrizen $\underline{A}$, $\underline{B}$, $\underline{C}$ sowie $\underline{C}_m$ derart ausgestaltet, dass der geschätzte Strom $i_{schätz}$ im Wesentlichen keine Kommutierungsrippel aufweist. Die Matrix $\underline{C}_m$ repräsentiert eine Mess-Matrix, die mit Größen belegt ist, die als Schätzgrößen aus der Beobachtereinrichtung 2 herausgeführt sind. Im Falle des vorliegenden Ausführungsbeispiels ist dies die Zustandsgröße Strom, denkbar sind jedoch auch andere physikalische Größen. Ferner ist die genannte Parametrierung derart ausgestaltet, dass zwischen Schätzwerten $\underline{y}_{schätz}$ und Messwerten $\underline{y}_{mess}$ im Wesentlichen keine Verzögerung auftritt.

Auf diese Art und Weise kann durch geeignete mathematische Modellbildung sowie Gewichtung des Differenzwertes $\Delta y$ der Schätzwert der interessierenden Zustandsgröße Strom des Gleichstrommotors 6 derart ausgestaltet werden, dass sein Verlauf für die Zwecke der vorliegenden Erfindung geeignet aufbereitet ist und im Ergebnis die Genauigkeit der Zuordnung des Drehwinkels zur Anzahl der Kommutierungsrippel erhöht. Sie erlaubt im Wesentlichen einen in Echtzeit realisierbaren Beobachter mit Hilfe des mathematischen Entwurfs-Modells 30, sowie eine Signalauswertung mit Hilfe der Zähleinrichtung 5, wodurch im Ergebnis eine genaue Messung des Motordrehwinkels möglich ist. Dies erlaubt beispielsweise die Realisierung eines gesetzlich vorgeschriebenen Einklemmschutzes bei elektrischen Fensterhebern oder die Verbesserung von Sitzverstellungen. Diese sehen vor, dass ein elektrischer Stellmotor im Falle eines Anfahrens an ein mechanisches Hindernis in der Lage sein muss, eine gerade ausgeführte Stellbewegung aus Sicherheitsgründen zu reversieren. Dazu hilft die genaue Kenntnis der Position, die durch den Motordrehwinkel repräsentiert wird.

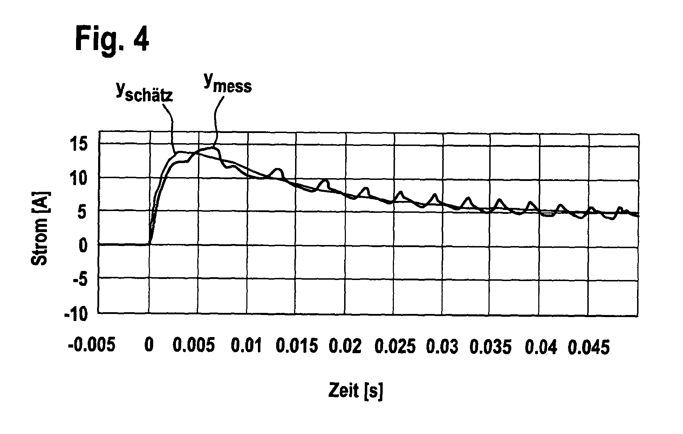

Figur 4 zeigt prinzipielle Zeitverläufe für den mittels der Beobachtereinrichtung 2 geschätzten Strom $i_{schätz}$ und für den gemessenen Strom $i_{mess}$. Es ist erkennbar, dass der geschätzte Strom $i_{schätz}$ im Vergleich zum gemessenen Strom $i_{mess}$ keinen überlagerten Wechselanteil d.h. keine Kommutierungsrippel aufweist.

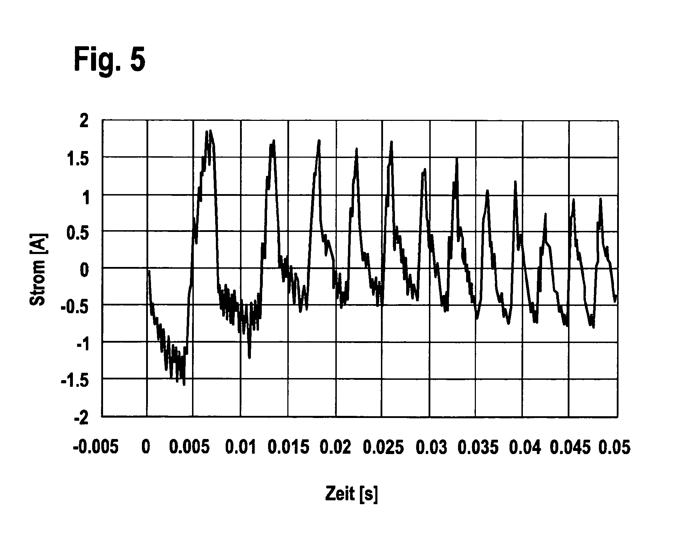

Figur 5 stellt einen prinzipiellen Zeitverlauf eines Differenzstromsignals aus gemessenem Strom $i_{mess}$ und geschätztem Strom $i_{schätz}$ dar, wie er mit dem erfindungsgemäßen Verfahren bereitgestellt werden kann. Man erkennt, dass der durch den Kommutierungsvorgang entstehende Wechselanteil des gemessenen Stromes im Wesentlichen reine Kommutierungsripples aufweist, die zur nachfolgenden Auswertung und Weiterverarbeitung für diverse Applikationen verwendet werden können. Das in der Figur 5 dargestellte Differenzstromsignal weist über der Zeitbasis zwischen 0 s und 0,05 s insgesamt zwölf Kommutierungsripples auf, die von der Zählereinrichtung 5 ausgewertet werden können.

Mit Hilfe des erfindungsgemäßen Verfahrens ist es somit möglich, einen Ist-Stromverlauf des Gleichstrommotors 6 derart nachzubilden, dass die Signalform des geschätzten Motorstroms gegenüber dem tatsächlichen Motorstrom geglättet ist. Die Schätzung des Stromverlaufs wird mittels einer Beobachtereinrichtung durchgeführt, die den Kommutierungsvorgang des Gleichstrommotors 6 nicht abbildet. Dazu wird die Dynamik der Beobachtereinrichtung 2 geeignet ausgelegt.

Als besonders vorteilhafter Aspekt der vorliegenden Erfindung wird angesehen, dass die Trennung des durch die Kommutierung bedingten Wechselanteils des Motorstroms mit Hilfe eines mit einem Beobachter geschätzten Stromes durchgeführt werden kann. Dies bedeutet günstigerweise eine Minimierung bzw. Reduktion von herkömmlichen Hardwarefiltern samt deren generierter Signalverzögerung und Phasenverschiebung zwischen Ein- und Ausgangssignalen. Gegenüber herkömmlichen Filterungsmethoden mit Hilfe von Hoch- bzw. Tief- und Bandpässen kann auf diese Art und Weise eine verbesserte Trennung zwischen Kommutierungsripples und Motorstrom erzielt werden.

Mittels heutiger leistungsstarker elektronischer Recheneinrichtungen 3 kann eine Implementierung derartiger mathematischer Modelle per Software kostengünstig durchgeführt werden, so dass in vorteilhafter Weise Hardwarekomponenten und Sensorik eingespart werden können.

Die in den Patentansprüchen, der Beschreibung und den Zeichnungen beschriebenen Aspekte der vorliegenden Erfindung können sowohl einzeln als auch in beliebiger Kombination für die Durchführung der Erfindung wesentlich sein.

## Patentansprüche

1. Verfahren zum Ermitteln eines durch mechanische Kommutierung eines Gleichstrommotors (6) entstehenden Wechselanteils eines Stroms, mit folgenden Verfahrensschritten:

   - Messen des Stromes;
   - Schätzen eines Gleichstromanteils des Stromes, wobei das Schätzen mit Hilfe einer Beobachtereinrichtung (2) mit einem mathematischen Modell (30) des Gleichstrommotors (6) durchgeführt wird; und
   - Ermitteln des Wechselanteils aus einer Differenz aus dem geschätzten Gleichstromanteil und dem gemessenen Strom.

2. Verfahren nach Anspruch 1, wobei durch Auswerten eines Differenzsignals aus dem geschätzten Gleichstromanteil und dem gemessenen Strom ein Motordrehwinkel ermittelt wird.

3. Verfahren nach Anspruch 1, wobei eine Rückführung einer Differenz aus einem geschätzten und einem gemessenen Parameter auf das Modell (30) des Gleichstrommotors (6) gewichtet durchgeführt wird.

4. Verfahren nach Anspruch 3, wobei der geschätzte Gleichstromanteil und der gemessene Strom des Gleichstrommotors (6) als Parameter verwendet wird.

5. Verfahren nach Anspruch 3 oder 4, wobei die Gewichtung der rückgeführten Differenz und das Modell (30) des Gleichstrommotors (6) derart ausgebildet sind, dass der geschätzte Gleichstromanteil des Stromes im wesentlichen keinen durch die Kommutierung des Motors hervorgerufenen Wechselanteil aufweist.

6. Verfahren nach einem der Ansprüche 2 bis 4, wobei das Modell (30) des Gleichstrommotors (6) und die Gewichtung der rückgeführten Differenz derart ausgebildet sind, dass sich im Wesentlichen keine Verzögerung zwischen dem gemessenen Strom und dem geschätzten Gleichstromanteil des Stromes ausbildet.

7. Vorrichtung zum Ermitteln eines durch mechanische Kommutierung eines Gleichstrommotors (6) hervorgerufenen Wechselanteils eines Stroms, wobei die Vorrichtung (1) eine Beobachtereinrichtung (2) mit einem mathematischen Modell (30) des Gleichstrommotors (6) aufweist, wobei ein Messen des Stromes und ein Schätzen eines Gleichstromanteils des Stromes durchgeführt wird, und wobei eine Differenzbildung aus dem gemessenen Strom und dem geschätzten Gleichstromanteil durchgeführt wird.

8. Vorrichtung nach Anspruch 7, wobei mittels einer Rückführungseinrichtung (31) eine Rückführung einer Differenz aus einem gemessenen und einem geschätzten Parameter auf das Modell (30) gewichtet durchgeführt wird.

9. Vorrichtung nach Anspruch 8, wobei als geschätzter Parameter der Gleichstromanteil des Stroms und als gemessener Parameter der Strom des Gleichstrommotors dient.

**10.** Vorrichtung nach Anspruch 8 oder 9, wobei die Gewichtung und das Modell (30) derart ausgebildet sind, dass ein Kommutierungsvorgang des Gleichstrommotors (6) nicht abgebildet wird.

**11.** Vorrichtung nach einem der Ansprüche 7 bis 9, wobei die Beobachtereinrichtung (2) und die Gewichtung der Rückführung derart ausgebildet sind, dass zwischen gemessenem Strom und geschätztem Gleichstromanteil im wesentlichen keine Verzögerung ausgebildet wird.

**12.** Vorrichtung nach einem der Ansprüche 7 bis 11, wobei die Vorrichtung (1) in einer elektronischen Recheneinrichtung (3) abgelegt ist.

**Claims**

**1.** Method for determining an alternating component of a current which is produced by mechanical commutation of a DC motor (6), comprising the following method steps:

- measuring the current;
- estimating a DC component of the current, with the estimation being carried out with the aid of an observer device (2) with a mathematical model (30) of the DC motor (6); and
- determining the alternating component from the difference between the estimated DC component and the measured current.

**2.** Method according to Claim 1, wherein a motor rotation angle is determined by evaluating a difference signal between the estimated DC component and the measured current.

**3.** Method according to Claim 1, wherein the difference between an estimated and a measured parameter is fed back to the model (30) of the DC motor (6) in a weighted fashion.

**4.** Method according to Claim 3, wherein the estimated DC component and the measured current of the DC motor (6) are used as parameters.

**5.** Method according to Claim 3 or 4, wherein the weighting of the fed-back difference and the model (30) of the DC motor (6) are formed in such a way that the estimated DC component of the current has substantially no alternating component which is caused by the commutation of the motor.

**6.** Method according to one of Claims 2 to 4, wherein the model (30) of the DC motor (6) and the weighting of the fed-back difference are formed in such a way that substantially no delay forms between the measured current and the estimated DC component of the current.

**7.** Apparatus for determining an alternating component of a current which is caused by mechanical commutation of a DC motor (6), wherein the apparatus (1) has an observer device (2) with a mathematical model (30) of the DC motor (6), wherein the current is measured and a DC component of the current is estimated, and wherein the difference between the measured current and the estimated DC component is calculated.

**8.** Apparatus according to Claim 7, wherein the difference between a measured and an estimated parameter is fed back to the model (30) in a weighted fashion by means of a feedback device (31).

**9.** Apparatus according to Claim 8, wherein the DC component of the current is used as the estimated parameter and the current of the DC motor is used as the measured parameter.

**10.** Apparatus according to Claim 8 or 9, wherein the weighting and the model (30) are formed in such a way that a commutation process of the DC motor (6) is not represented.

**11.** Apparatus according to one of Claims 7 to 9, wherein the observer device (2) and the weighting of the feedback are formed in such a way that substantially no delay is formed between the measured current and the estimated DC component.

**12.** Apparatus according to one of Claims 7 to 11, wherein the apparatus (1) is stored in an electronic computer device (3).

**Revendications**

1.  Procédé pour déterminer la composante alternative d'un courant produit par la commutation mécanique d'un moteur à courant continu (6), comprenant les étapes de procédé suivantes :

    - mesure de l'intensité du courant,
    - évaluation de la composante de courant continu en l'évaluant à l'aide d'une installation d'observation (2) et d'un modèle mathématique (30) du moteur à courant continu (6), et
    - détermination de la composante alternative à partir de la différence de la composante continue évaluée et du courant mesuré.

2.  Procédé selon la revendication 1,
    selon lequel
    par l'exploitation d'un signal de différence entre la composante évaluée du courant continu et le courant mesuré, on détermine un angle de rotation du moteur.

3.  Procédé selon la revendication 1,
    selon lequel
    on pondère le retour d'une différence entre un paramètre évalué et un paramètre mesuré du modèle (30) du moteur à courant continu (6).

4.  Procédé selon la revendication 3,
    selon lequel
    on utilise comme paramètre la composante évaluée de courant continu et l'intensité mesurée dans le moteur à courant continu (6).

5.  Procédé selon la revendication 3 ou 4,
    selon lequel
    la pondération de la différence réintroduite et le modèle (30) du moteur à courant continu (6) sont réalisés pour que la composante de courant continu évalué de l'intensité ne présente pratiquement pas de composante alternative engendrée par la commutation du moteur.

6.  Procédé selon l'une des revendications 2 à 4,
    selon lequel
    le modèle (30) du moteur à courant continu (6) et la pondération de la différence réintroduire sont tels qu'il n'y a pratiquement pas de temporisation entre l'intensité mesurée du courant et la composante de courant continu évaluée du courant.

7.  Dispositif pour déterminer la composante alternative d'un courant produit par la commutation mécanique d'un moteur à courant continu (6), selon lequel le dispositif (1) comporte une installation d'observation (2) avec un modèle mathématique (30) du moteur à courant continu (6), on mesure le courant et on évalue sa composante de courant continu et on forme la différence entre l'intensité mesurée du courant et sa composante continu évaluée.

8.  Dispositif selon la revendication 7,
    selon lequel
    à l'aide d'une installation de retour (31) on retourne une différence entre un paramètre mesuré et un paramètre évalué avec pondération selon le modèle (30).

9.  Dispositif selon la revendication 8,
    selon lequel
    comme paramètre évalué on utilise la composante de courant continu de l'intensité et comme paramètre mesuré on utilise le courant dans le moteur à courant continu.

10. Dispositif selon la revendication 8 ou 9,
    selon lequel
    la pondération et le modèle (30) sont tels qu'il n'y a pas image de l'opération de commutation du moteur à courant continu (6).

**11.** Dispositif selon l'une des revendications 7 à 9,
selon lequel
l'installation d'observation (2) et la pondération du retour sont telles qu'il n'y a pratiquement pas de retard entre l'intensité mesurée et la composante de courant continu évaluée.

**12.** Dispositif selon l'une des revendications 7 à 11,
selon lequel
le dispositif (1) est enregistré dans une installation électronique de calcul (3).

# Fig. 1

# Fig. 2

**Fig. 3**

# Fig. 4

$y_{schätz}$   $y_{mess}$

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 890841 A